# FASCICULE DE BREVET EUROPEEN

(11) **EP 2 904 735 B1**
(45) Date de publication et mention de la délivrance du brevet: **15.03.2017**
(21) Numéro de dépôt: 13782742.4
(22) Date de dépôt: 24.09.2013
(51) Int. Cl.: H04L 12/14, H04L 12/24

(54) **TECHNIQUE DE COMMUNICATION ENTRE UNE ENTITÉ CLIENTE ET UN RÉSEAU DE DONNÉES EN MODE PAQUET**
VERFAHREN ZUR KOMMUNIKATION ZWISCHEN EINER CLIENT-EINHEIT UND EINEM PAKETMODUS-DATENNETZ
TECHNIQUE FOR COMMUNICATION BETWEEN A CLIENT ENTITY AND A PACKET MODE DATA NETWORK

(30) Priorité: 01.10.2012 FR 1259282
(43) Date de publication de la demande: 12.08.2015
(73) Titulaire: Orange, 75015 Paris (FR)
(72) Inventeur: CHATRAS, Bruno, F-75012 Paris (FR); MOUAFIK, Ali Amine, F-92100 Boulogne Billancourt (FR); BERTRAND, Simon, F-75017 Paris (FR)
(86) Numéro de dépôt international: PCT/FR2013/052228
(87) Numéro de publication internationale: WO 2014/053739

(56) Documents cités:
- US-A1- 2011 302 289
- "3rd Generation Partnership Project; Technical Specification Group Services and System Aspects; Policy and charging control architecture (Release 11)", 3GPP STANDARD; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.7.0, 11 septembre 2012 (2012-09-11), pages 1-178, XP050649048, cité dans la demande
- "3rd Generation Partnership Project; Technical Specification Group Core Network and Terminals; Policy and Charging Control (PCC) Reference points (Release 11)", 3GPP STANDARD; 3GPP TS 29.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V11.6.0, 21 septembre 2012 (2012-09-21), pages 1-194, XP050649625, cité dans la demande
- DATABASE WPI Week 200830 Thomson Scientific, London, GB; AN 2008-E28059 XP002703240, & CN 101 072 170 A (HUAWEI TECHNOLOGIES CO LTD) 14 novembre 2007 (2007-11-14)
- ZTE: "PCRF selection", 3GPP DRAFT; S2-075065_PCRF SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Ljubljana; 20071102, 2 novembre 2007 (2007-11-02), XP050261788,
- ORANGE: "Selection of PCRF at the GW and at the AF", 3GPP DRAFT; S2-074374_PCRF_SOLUTION1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kobe; 20071002, 2 octobre 2007 (2007-10-02), XP050261183,
- ORANGE: "Selection of PCRF at the GW and at the AF", 3GPP DRAFT; S2-074375_PCRF_SOLUTION2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kobe; 20071002, 2 octobre 2007 (2007-10-02), XP050261184,

## Description

L'invention se situe dans le domaine de la gestion d'une session de communication entre une entité cliente et un réseau externe de données en mode paquet, par l'intermédiaire d'un réseau de communication en mode paquet, et plus particulièrement celui du contrôle de règles à appliquer à la session et du comptage de flux de données associés à cette session.

Des évolutions du réseau de communication mobile UMTS, pour « Universal Mobile Terrestrial System », normalisé par l'organisme 3GPP sont en cours de discussion. Ces évolutions constituent la base d'une future quatrième génération et sont également appelées LTE, pour « Long Term Evolution ». Elles prévoient notamment une évolution du réseau coeur, EPC, pour « Evolved Packet Core », dans lequel les échanges s'effectuent uniquement en mode paquet. Lors de son attachement au réseau de communication mobile, une entité cliente ou équipement utilisateur UE établit une connexion pour émettre et recevoir des paquets de données IP. Une session de communication est ensuite établie entre l'entité cliente UE et un réseau de données externe en mode paquet par l'intermédiaire d'une passerelle d'accès au réseau. Cette passerelle d'accès est l'entité du réseau de communication mobile en charge de l'interface avec le réseau de données externe. Des mécanismes de contrôle et de comptage, appelée « Policy and Charging Control » ou PCC, sont notamment prévus pour être appliqués aux sessions. Le document 3GPP TS 23.203 spécifie la mise en oeuvre de cette fonction dans le réseau coeur EPC. Différentes entités fonctionnelles sont prévues, notamment, une entité de contrôle des règles PCRF, pour « Policy and Charging Rules Function », une entité d'application de ces règles PCEF, pour « Policy and Charging Enforcement Function » et une entité AF, pour « Application Function », permettant de mettre en oeuvre un contrôle dynamique des règles et/ou du comptage pour un service proposé à des entités clientes. La fonction PCEF est mise en oeuvre au niveau de la passerelle d'accès, qui comprend ainsi une entité PCEF. Il est prévu que l'entité AF puisse communiquer avec l'entité de contrôle des règles PCRF (ou une entité mandataire) pour transmettre des informations de session dynamique et pour recevoir des notifications, par exemple relatives à l'occurrence d'évènements. Toutefois, il est possible qu'il n'existe pas d'entité de contrôle de règles dans le réseau de communication. De plus, même quand une telle entité existe, il est possible qu'elle n'accepte de recevoir des commandes qu'en provenance de certaines entités AF. Ceci conduit à un échec de mise en oeuvre de la fonction de commande de ressources. Un des buts de l'invention est de remédier à des insuffisances/inconvénients de l'état de la technique et/ou d'y apporter des améliorations.

Selon un premier aspect, l'invention a pour objet un procédé de communication entre une entité d'application de règles et une entité de contrôle de règles dans un réseau de communication. Le procédé comprend les étapes suivantes mises en oeuvre par l'entité de contrôle de règles :
- recevoir en provenance de ladite entité d'application une demande d'ouverture d'une session de commande relative à une session de communication entre une entité cliente et un réseau de données en mode paquet externe ;
- commander à ladite entité d'application d'associer pour ladite session de communication à au moins un message de niveau applicatif reçu en provenance de l'entité cliente au moins une information relative à une fonction de commande de ressources, ladite au moins une information étant destinée à être utilisée par une entité applicative située dans ledit réseau de données externe pour mettre en oeuvre une commande de ressources pour ladite session.

Plus précisément, l'entité de contrôle de règles commande à ladite entité d'application d'insérer pour ladite session de communication dans au moins un message de niveau applicatif reçu en provenance de l'entité cliente au moins une information relative à une fonction de commande de ressources, ladite au moins une information étant destinée à être utilisée par une entité applicative située dans ledit réseau de données externe pour mettre en oeuvre une commande de ressources pour ladite session.

L'invention tire son origine de problèmes constatés lorsque le réseau de communication est un réseau mobile 3GPP. Le procédé de communication est toutefois applicable à tout réseau de communication en mode paquet, dans lequel est prévue une architecture de commande de ressources, comprenant un point de décision de règles PDP, pour « Policy Décision Point », un point d'application de règles PEP, pour « Policy Enforcement Point », tels que définis dans le document de l'IETF RFC 3198, intitulé «Terminology for Policy-Based Management », et une interface permettant à un fournisseur d'applications de service ASP, pour «Application Service Provider » de communiquer avec le point de décision de règles pour transmettre des commandes de ressources.

Par ailleurs, l'invention tire également son origine d'un problème associé au support d'une fonction de commande de ressources. Le procédé de communication est également applicable pour transmettre à l'entité applicative toute information nécessaire à la mise en oeuvre de la fonction de commande de ressources.

Le procédé de communication permet ainsi à une entité applicative de contacter l'entité de contrôle ou un mandataire de cette entité de contrôle pour transmettre une commande de ressources en utilisant la ou les informations qui lui ont été transmises. L'interface entre l'entité applicative et l'entité de contrôle (appelée interface Rx dans la spécification TS 23.203) peut alors être utilisée pour transmettre une ou des caractéristiques pour cette session de communication. L'entité de contrôle contactée directement ou par l'intermédiaire du mandataire commande l'entité d'application de règles par l'intermédiaire de laquelle sont acheminées le ou les flux de données associées à la session de communication. Ces caractéristiques peuvent correspondre par exemple à une demande de ressources à un niveau de qualité de service, une bande passante, .... L'entité de contrôle contactée directement ou par l'intermédiaire d'une entité mandataire détermine en fonction de cette ou de ces caractéristiques une ou des règles à appliquer et commande l'entité d'application de règles par l'intermédiaire de laquelle sont acheminées le ou les flux de données associées à la session de communication. Ces règles peuvent correspondre par exemple à une fonction de contrôle de la qualité de service pour un flux de données associé par la session de communication, à une fonction d'acheminement ou de blocage d'un flux de données (également appelée « gating control » en anglais) ou bien encore de fonctions de comptage.

Les différents modes ou caractéristiques de réalisation mentionnés ci-après peuvent être ajoutés indépendamment ou en combinaison les uns avec les autres, aux étapes du procédé de communication tel défini précédemment.

Selon une caractéristique particulière, l'information est relative à un support de la fonction de commande de ressources par l'entité de contrôle.

L'entité applicative transmet alors une commande de ressources uniquement lorsque le réseau comprend une entité de contrôle de règles et lorsque l'entité de contrôle de règles ou un mandataire de cette entité de contrôle est configurée pour recevoir de telles commandes.. Ceci évite un échec associé à la mise en oeuvre de la fonction de commande de ressources.

Selon une caractéristique particulière, l'information est un identifiant d'une entité de commande à contacter, ledit identifiant étant destiné à être utilisé par ladite entité applicative pour transmettre au moins une caractéristique pour ladite session.

Il est prévu au paragraphe 6.2.3 de la TS 23.203 que l'entité applicative détermine l'entité de contrôle de règles à contacter en fonction d'une adresse dans le réseau de l'entité cliente et/ou d'une identité de l'entité cliente connue de l'entité applicative. Pour mettre en oeuvre cette détermination, l'entité applicative obtient l'adresse dans le réseau de l'entité cliente à partir de l'adresse source du paquet portant une requête de service. Lorsqu'il existe un ou plusieurs dispositifs de traduction d'adresse NAT, pour «Network Address Translation », sur le chemin entre l'entité cliente et l'entité applicative, l'adresse source du paquet portant la requête de service ne correspond pas à l'adresse dans le réseau de l'entité cliente. Il n'est donc pas possible dans ce cas à l'entité applicative de déterminer l'entité de contrôle à contacter à partir de l'adresse source du paquet reçu. Par ailleurs, l'identité sous laquelle l'application connait l'utilisateur de l'entité cliente, par exemple des informations de connexion, ou login sur un serveur applicatif Web, est souvent indépendante des identités allouées par l'opérateur de réseau et ne permet donc pas de déterminer l'entité de contrôle à contacter. Ceci empêche la mise en oeuvre de la fonction de commande de ressources, lorsque plusieurs entités de contrôle de règles sont déployées dans le réseau de communication. En effet, l'entité applicative doit être en mesure de contacter l'entité de contrôle qui commande l'entité d'application des règles par l'intermédiaire de laquelle l'entité cliente communique avec l'application.

Le procédé de communication permet ainsi à une entité applicative de contacter directement l'entité de contrôle ou un mandataire de cette entité de contrôle indépendamment de l'identité de l'entité cliente présente dans le message de niveau applicatif ou bien encore dans un paquet portant ce message de niveau applicatif. L'interface entre l'entité applicative et l'entité de contrôle (appelée interface Rx dans la spécification TS 23.203) peut alors être utilisée pour transmettre une ou des caractéristiques pour cette session de communication.

Selon une caractéristique particulière, l'étape de commande est mise en oeuvre en fonction d'un profil associé à un utilisateur de l'entité cliente.

Ceci permet par configuration du profil de l'utilisateur de l'entité cliente de commander ou non l'association de l'information relative à une fonction de commande de ressources pour la session.

Selon une caractéristique particulière, l'étape de commande est mise en oeuvre en fonction d'un identifiant du réseau de données externe.

Ceci permet de commander ou non l'association de l'information relative à une fonction de commande de ressources pour la session pour certains réseaux de données externes.

Selon une caractéristique particulière, le procédé de communication comprend en outre une réception d'une notification émise par ladite entité d'application suite à une réception d'un message de niveau applicatif en provenance de l'entité cliente et relatif à une application, et dans lequel l'étape de commande est mise en oeuvre pour un message de niveau applicatif relatif à ladite application.

Ceci permet de commander ou non l'association de l'information relative à une fonction de commande de ressources pour certaines applications. A titre d'exemple non limitatif, l'entité cliente peut alors obtenir une qualité de service plus élevée pour la distribution d'un contenu multimédia.

Selon une caractéristique particulière, l'entité de contrôle commande en outre à ladite entité d'application d'associer audit au moins un message de niveau applicatif reçu en provenance de l'entité cliente un identifiant de session.

Lorsqu'un équipement de traduction d'adresse se situe entre l'entité d'application de règles et l'entité applicative, cette dernière fournit à l'entité de contrôle ou à une entité mandataire une adresse obtenue après traduction, qui ne permet pas à l'entité de contrôle d'effectuer une association de session. En effet, la spécification TS 23.203 prévoit que l'entité de contrôle met en oeuvre une fonction d'association de session (appelée « session binding » en anglais et décrite au paragraphe 6.1.1.2 de la spécification TS 23.203) entre une information de session applicative et une session de communication pour corréler une requête reçue de l'entité applicative avec la session de communication (« IP-CAN session »).

Grâce à cette caractéristique particulière, l'entité applicative peut fournir à l'entité de contrôle de règles un identifiant de session dans le réseau de communication, permettant ainsi à l'entité de contrôle de retrouver l'entité cliente concernée et d'effectuer l'association de session.

Selon un deuxième aspect, l'invention concerne également un procédé d'obtention de règles par une entité d'application de règles auprès d'une entité de contrôle de règles dans un réseau de communication. Le procédé comprend les étapes suivantes mises en oeuvre par l'entité d'application de règles :
- recevoir une demande d'ouverture d'une session de communication entre une entité cliente et un réseau de données en mode paquet externe ;
- transmettre à ladite entité de contrôle une demande d'ouverture d'une session de commande relative à ladite session de communication ;
- recevoir en provenance de ladite entité de contrôle une commande d'association pour ladite session de communication à au moins un message de niveau applicatif reçu en provenance de l'entité cliente au moins une information relative à une fonction de commande de ressources pour la session, ladite au moins une information étant destinée à être utilisée par une entité applicative située dans ledit réseau de données externe pour mettre en oeuvre une commande de ressources pour ladite session ;
- recevoir en provenance de l'entité cliente un message de niveau applicatif;
- transmettre ledit message et ladite au moins information.

L'étape de réception en provenance de ladite entité de contrôle d'une commande d'association est plus précisément une étape de réception en provenance de ladite entité de contrôle d'une commande d'insertion pour ladite session de communication dans au moins un message de niveau applicatif reçu en provenance de l'entité cliente d'au moins une information relative à une fonction de commande de ressources pour la session, ladite au moins une information étant destinée à être utilisée par une entité applicative située dans ledit réseau de données externe pour mettre en oeuvre une commande de ressources pour ladite session ;

Les avantages énoncés pour le procédé de communication selon le premier aspect sont transposables directement au procédé d'obtention de règles.

Selon un troisième aspect, l'invention concerne également une entité de contrôle de règles, agencée pour communiquer avec une entité d'application de règles dans un réseau de communication, ladite entité comprenant les modules suivants :
- un module de réception, agencé pour recevoir en provenance de ladite entité d'application une demande d'ouverture d'une session de commande relative à une session de communication entre une entité cliente et un réseau de données en mode paquet externe ;
- un module de commande, agencé pour commander à ladite entité d'application d'associer pour ladite session de communication à au moins un message de niveau applicatif reçu en provenance de l'entité cliente au moins une information relative à une fonction de commande de ressources pour la session, ladite au moins une information étant destinée à être utilisée par une entité applicative située dans ledit réseau de données externe pour mettre en oeuvre une commande de ressources pour ladite session.

Plus précisément le module de commande de l'entité de contrôle de règles est agencé pour commander à ladite entité d'application d'insérer pour ladite session de communication dans au moins un message de niveau applicatif reçu en provenance de l'entité cliente au moins une information relative à une fonction de commande de ressources pour la session, ladite au moins une information étant destinée à être utilisée par une entité applicative située dans ledit réseau de données externe pour mettre en oeuvre une commande de ressources pour ladite session.

Les avantages énoncés pour le procédé de communication selon le premier aspect sont transposables directement à l'entité de contrôle de règles.

Selon un quatrième aspect, l'invention concerne également une entité d'application de règles, agencée pour communiquer avec une entité de contrôle de règles dans un réseau de communication, ladite entité comprenant les modules suivants:
- un module de réception, agencé pour
   - recevoir une demande d'ouverture d'une session de communication entre une entité cliente et un réseau de données en mode paquet externe
   - recevoir en provenance de ladite entité de contrôle une commande d'association pour ladite session de communication à au moins un message de niveau applicatif reçu en provenance de l'entité cliente au moins une information relative à une fonction de commande de ressources pour la session, ladite au moins une information étant destinée à être utilisée par une entité applicative située dans ledit réseau de données externe pour mettre en oeuvre une commande de ressources pour ladite session ;
- un premier module d'émission, agencé pour transmettre à ladite entité de contrôle une demande d'ouverture d'une session de commande relative à ladite session de communication ;
- un module d'association, agencé pour associer à au moins un message de niveau applicatif reçu pour ladite session ladite au moins une information ;
- un deuxième module d'émission, agencé pour transmettre ledit message et ladite au moins information associée.

Plus précisément, le module de réception de l'entité d'application de règles est agencé pour recevoir en provenance de ladite entité de contrôle une commande d'insertion pour ladite session de communication dans au moins un message de niveau applicatif reçu en provenance de l'entité cliente d'au moins une information relative à une fonction de commande de ressources pour la session, ladite au moins une information étant destinée à être utilisée par une entité applicative située dans ledit réseau de données externe pour mettre en oeuvre une commande de ressources pour ladite session.

De même le module d'association de l'entité d'application de règles est plus précisément agencé pour insérer dans au moins un message de niveau applicatif reçu pour ladite session ladite au moins une information.

Les avantages énoncés pour le procédé d'obtention selon le deuxième aspect sont transposables directement à l'entité d'application de règles.

Selon un cinquième aspect, l'invention concerne en outre un système de contrôle de règles dans un réseau de communication, ledit système comprenant au moins une entité de contrôle de règles selon le troisième aspect, au moins une entité d'application de règles selon le quatrième aspect et une entité applicative, agencée pour recevoir au moins une information destinée à être utilisée pour mettre en oeuvre une commande de ressources pour une session.

Les avantages énoncés pour le procédé de communication selon le premier aspect sont transposables directement au système de contrôle de règles.

Selon un sixième aspect, l'invention concerne un programme pour une entité de contrôle de règles, comprenant des instructions de code de programme destinées à commander l'exécution des étapes du procédé de communication précédemment décrit, lorsque ledit programme est exécuté par ladite entité et un support d'enregistrement lisible par une entité de contrôle de règles sur lequel est enregistré un programme pour une entité.

Selon un septième aspect, l'invention concerne un programme pour une entité d'application de règles, comprenant des instructions de code de programme destinées à commander l'exécution des étapes du procédé d'obtention précédemment décrit, lorsque ledit programme est exécuté par ladite entité et un support d'enregistrement lisible par une entité d'application de règles sur lequel est enregistré un programme pour une entité.

La technique de communication sera mieux comprise à l'aide de la description suivante de modes de réalisation particuliers, en référence aux dessins annexés sur lesquels :
- la figure 1 représente dans son environnement un système de contrôle de règles selon un mode particulier de réalisation ;
- la figure 2 représente des étapes d'un procédé de communication dans un premier mode particulier de réalisation ;
- la figure 3 représente des étapes du procédé de communication dans un deuxième mode particulier de réalisation ;
- la figure 4 représente une entité de contrôle de règles selon un mode particulier de réalisation ;
- la figure 5 représente une entité d'application de règles selon un mode particulier de réalisation.

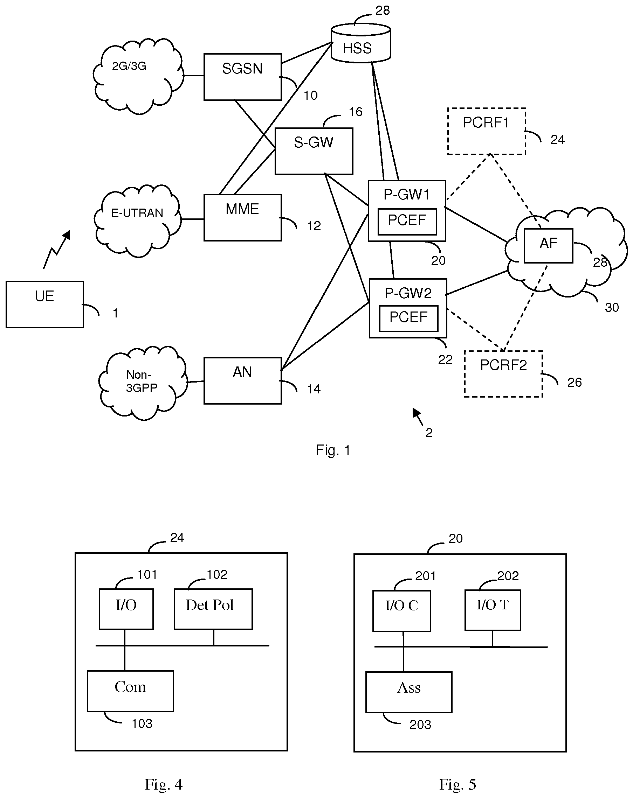

La figure 1 représente de façon simplifiée un réseau 2 de communication en mode paquet. Un équipement utilisateur UE 1, également appelé entité cliente, est représenté dans son environnement. L'équipement utilisateur 1 peut accéder en mode paquet à un réseau de données 30 externe par l'intermédiaire de différents types de réseaux d'accès. On se place ici dans le cas particulier où le réseau de communication 2 est conforme à une architecture EPS, pour « Evolved Packet System », telle que définie dans la spécification 3GPP TS 23 401 v8.16.0. Il est ici souligné que les versions correspondant à la version 8 sont mentionnées par la suite. Aucune limitation n'est attachée à ce numéro de version, le procédé de communication étant également applicable aux versions ultérieures de ces normes.

Le réseau d'accès peut être radio, conformes ou non aux spécifications définies par l'organisme de normalisation 3GPP, ou bien filaires.

Un premier type de réseau d'accès correspond à un réseau d'accès radio de deuxième génération 2G ou bien de troisième génération 3G. Dans ce cas, l'accès radio s'effectue par l'intermédiaire d'un équipement GERAN, pour « GSM/EDGE Radio Access network » pour un accès radio 2G, ou bien d'un équipement UTRAN, pour « UMTS Terrestrial Ressource Access Network » pour un accès radio 3G.

Un deuxième type de réseau d'accès correspond à un réseau d'accès radio LTE, pour « Long Term Evolution », correspondant aux évolutions de la troisième génération, également appelé pré-4G. Dans ce cas, l'accès radio s'effectue par l'intermédiaire d'un équipement E-UTRAN, pour « Evolved UTRAN ».

Ces deux premiers types de réseaux d'accès sont conformes à l'ensemble des spécifications définies par le groupe de normalisation 3GPP.

Un troisième type de réseau d'accès regroupe l'ensemble des accès non conformes au 3GPP. Le troisième type de réseau d'accès radio est relié à un équipement noeud d'accès AN 14. Il s'agit par exemple d'un accès filaire de type ADSL, un accès radio WIFI®, WiMAX pour « Worldwide Interoperability for Microwave Access », CDMA, ...

Les deux premiers types de réseaux d'accès sont reliés respectivement à des équipements de gestion de mobilité. Pour un accès radio 2G/3G, un tel équipement 10 est appelé SGSN, pour « Serving GPRS Service Node ». Pour un accès radio LTE, un tel équipement 12 est appelé MME, pour « Mobility Management Equipment ». Ces deux équipements de gestion de mobilité sont reliés à une passerelle de rattachement 16 S-GW, pour « Serving Gateway ». Ils sont reliés également à un serveur des abonnés du réseau HSS 28, pour «Home Subscriber System », ce serveur mémorisant l'ensemble des données de souscription des abonnés du réseau de communication 2.

La passerelle de rattachement 16 et l'équipement noeud d'accès 14 sont reliés à deux passerelles d'accès P-GW1 20 et P-GW2 22. Les passerelles d'accès P-GW1 et P-GW2 permettent d'accéder au réseau de données 30 en mode paquet. La passerelle P-GW établit la session de communication entre l'équipement utilisateur UE et le réseau de données externe en fournissant une connectivité IP (« Internet Protocol » en anglais). A titre d'exemple, le réseau de données 30 correspond au réseau de données public Internet IP et permet un accès à des services de type Internet. Il peut également correspondre à un réseau de données propre à un opérateur et permet un accès à des services proposés par cet opérateur. Un serveur applicatif, plus précisément l'entité AF 28, pour « Application Function », permettant le contrôle dynamique des règles et/ou du comptage pour un service, est également représenté sur la figure 1. Le serveur applicatif permet de fournir un service à l'utilisateur dans le réseau de données 30.

Le réseau de communication 2, tel que représenté à la figure 1, comprend deux systèmes de contrôle de règles PCC. Une règle PCC (« Policy Control Function ») telle que définie au paragraphe 3.1 de la TS 23.203 correspond à un ensemble d'informations permettant la détection d'un flux de données de service et fournissant des paramètres pour le contrôle de politiques et/ou de comptage.

Un système de contrôle de règle comprend une entité de contrôle des règles PCRF et une ou des entités mettant en oeuvre une fonction d'application des règles PCEF. La fonction d'application de règles PCEF permet d'assurer des fonctionnalités de comptage et d'application de règles, sous contrôle de l'entité de contrôle PCRF. L'entité de contrôle PCRF collecte depuis plusieurs sources des informations liées aux réseaux (type d'accès radio, adresses de passerelles, localisation du terminal du client, etc.), des informations liées à l'abonnement du client, et des informations liées aux applications utilisées par le client sur son terminal (type d'application, type de media, etc.). L'entité de contrôle PCRF a accès aux informations de souscription de l'utilisateur de l'entité cliente mémorisées dans une base de données appelée SPR (pour « Subscription Profile Repository ») afin de pouvoir adapter l'affectation des ressources de transport par le service ainsi que le comptage du service en fonction du profil de l'utilisateur de l'entité cliente.

Lors de la procédure d'ouverture d'une session de communication, l'entité d'application des règles PCEF ouvre une session de commande relative à la session de communication avec l'entité de contrôle des règles PCRF et lui communique des informations associées à cette session de communication (par exemple le type d'accès radio, les paramètres de qualité de service demandés, la bande passante demandée, ...). En fonction de ces caractéristiques et d'autres informations provenant de plusieurs autres sources, l'entité de contrôle PCRF détermine la politique initiale (qualité de service, tarification à mettre en place, autorisation d'accès) à appliquer pour les différents services portés par la session de communication en cours. Cette politique peut être modifiée en fonction d'événements se produisant durant la session de communication.

Toutes les interfaces de l'architecture PCC (hormis l'interface avec la base de données SPR) sont des applications DIAMETER et s'appuient sur le protocole de base DIAMETER tel que défini dans le document de l'IETF RFC 3588.

La spécification 3GPP TS 23.203 « Policy and charging control architecture » définit l'architecture pour la mise en oeuvre de la fonction PCC.

La spécification 3GPP TS 29.212 « Policy and Charging Control over Gx reference point » définit l'interface entre l'entité de contrôle PCRF et l'entité d'application PCEF.

La spécification 3GPP TS 29.214 « Policy and Charging Control over Rx reference point » définit l'interface entre l'entité de contrôle PCRF et l'entité applicative AF.

Deux entités de contrôle PCRF1 24 et PCRF2 26 sont représentées sur la figure 1. L'entité de contrôle PCRF1 24 communique avec la passerelle d'accès P-GW1 20, mettant en oeuvre une fonction d'application des règles PCEF. L'entité de contrôle PCRF2 26 communique avec la passerelle d'accès P-GW2 22, mettant en oeuvre une fonction d'application des règles PCEF.

Il est bien entendu que le réseau de communication 2 représenté à la figure 1 ne comprend qu'un nombre limité d'équipements représentés afin de ne pas surcharger cette figure. Aucune limitation n'est attachée à cette représentation.

Par la suite, on appelle session de communication ou connexion à un réseau de données paquet une association entre un équipement utilisateur UE, représenté par une adresse IPv4 et/ou un préfixe IPv6, et le réseau de données paquet, représenté par un identifiant de réseau de données APN, pour « Access Point Name ». Cette session peut être indifféremment appelée « session IP-CAN », « PDN Connexion » pour un accès LTE, « Contexte PDP » pour un accès 2G/3G.

On se place par la suite dans le cas particulier où les échanges entre l'équipement utilisateur UE et le serveur applicatif 28 sont conformes au protocole HTTP, pour « HyperText Transfert Protocol ». Il est ici souligné que le protocole HTTP est donné à titre d'exemple non limitatif. Il est ainsi possible de mettre en oeuvre le procédé de communication pour tout type de protocole, tel que le protocole RTSP (pour « Real Time Streaming Protocol ») ou même des protocoles propriétaires.

Un flux de données de service représente un flux de paquets IP comprenant une même adresse de transport source (adresse IP, numéro de port), une même adresse de transport de destination (adresse IP, numéro de port) et un même identifiant de protocole de transport.

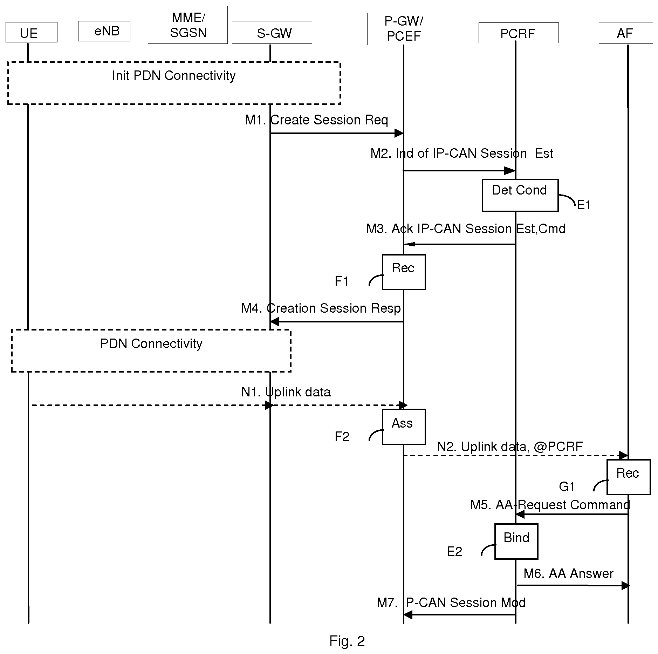

Un procédé de communication va maintenant être décrit en relation avec la figure 2 dans un premier mode de réalisation. Dans la suite, la description se focalise sur les étapes du procédé de communication mises en oeuvre par l'entité d'application de règles PCEF1 (mise en oeuvre par la passerelle d'accès P-GW1 20) et l'entité de contrôle PCRF1 24. Par la suite, les acronymes PCEF et PCRF sont utilisés pour désigner respectivement PCEF1 et PCRF1.

La description commence par une phase d'initialisation d'une connectivité (« PDN connectivity ») mise en oeuvre entre l'équipement utilisateur UE et la passerelle de rattachement S-GW 16. La passerelle S-GW transmet alors à la passerelle d'accès P-GW1 un message M1 « Create Session Request », tel que décrit au paragraphe 5.3.2.1 de la spécification 23.401 par exemple.

Sur réception de ce message M1, l'entité d'application de règles PCEF transmet à l'entité de contrôle de règles PCRF une demande d'ouverture d'une session de commande relative à la session de communication entre l'équipement utilisateur et le réseau de données en mode paquet externe, c'est-à-dire un message M2 « Indication of IP-CAN Session Establishment », tel que défini dans la spécification TS 23.203 (paragraphe 7.2). Plus précisément ce message M2 est un message Diameter « Credit Control Request Initiate » (tel que défini dans la spécification TS 29.212 v. 8.16.0), comprenant notamment le numéro international de l'utilisateur de l'entité cliente MSISDN (pour « Mobile Subscriber Integrated Services Digital Network-Number ») et un identifiant du réseau de données externe APN.

Dans une étape E1, l'entité de contrôle PCRF détermine comme décrit précédemment des politiques à appliquer à cette session de communication. Toujours dans cette étape E1, l'entité de contrôle détermine s'il est nécessaire de fournir à l'entité applicative AF 28 une ou des informations relatives à une fonction de commande de ressources. Dans une première variante à ce premier mode de réalisation, l'entité de contrôle détermine s'il est nécessaire de fournir à l'entité applicative AF 28 une information relative à un support de la fonction de commande de ressources pour la session. Dans ce cas, cette information est fournie de manière explicite. Dans une deuxième variante à ce premier mode de réalisation, l'entité de contrôle détermine s'il est nécessaire de fournir à l'entité applicative AF 28 un identifiant d'une entité de commande à contacter. La fourniture de cet identifiant indique de manière implicite que la fonction de commande de ressources est supportée pour cette session par l'entité de contrôle. Dans une troisième variante à ce premier mode de réalisation, l'entité de contrôle détermine s'il est nécessaire de fournir à l'entité applicative AF 28 une information relative à un support d'une fonction de commande de ressources pour cette session et un identifiant d'une entité de commande à contacter. L'information relative à un support d'une fonction de commande de ressources et un identifiant d'une entité de commande à contacter correspondent ainsi à des informations relatives à la fonction de commande de ressources.

L'identifiant d'une entité de commande à contacter est destiné à être utilisé par l'entité applicative située dans le réseau de données externe pour transmettre au moins une caractéristique pour la session de communication. L'entité de commande à contacter peut être directement l'entité de contrôle PCRF ou bien une entité mandataire, telle qu'une entité de routage Diameter (« Diameter Routing Agent »).

Dans un mode de réalisation particulier, l'identifiant de l'entité de commande à contacter est une adresse IP. Dans un autre mode de réalisation, l'identifiant de l'entité de commande à contacter est un nom de domaine complètement qualifié FQDN, pour « Fully Qualified Domain Name ». Aucune limitation n'est attachée à la structure de cet identifiant.

Dans un mode de réalisation particulier, l'information relative à la fonction de commande de ressources est fournie en fonction de l'identifiant de réseau de données. Il s'agit par exemple de le fournir pour certains identifiants de réseaux de données, par exemple des réseaux de données pour lesquels il existe des accords privilégiés.

Dans un autre mode de réalisation particulier, l'information relative à la fonction de commande de ressources est fournie en fonction du profil de l'utilisateur de l'entité cliente. Il s'agit par exemple de le fournir pour certains profils, par exemple susceptibles d'avoir accès à une qualité de service supérieure.

Dans encore un autre mode de réalisation particulier, l'information relative à la fonction de commande de ressources est fournie en fonction de l'identifiant du réseau de données et du profil de l'utilisateur de l'entité cliente.

En réponse au message M2 de demande d'ouverture d'une session de commande, l'entité de contrôle PCRF transmet à l'entité d'application PCEF un message M3 d'acquittement « Ack IP-CAN Session Establishment », comprenant des règles PCC à appliquer à la session de communication. Lorsque l'entité de contrôle a déterminé que une ou des informations relatives à la fonction de commande de ressources doivent être fournies à l'entité applicative, le message M3 commande également à l'entité d'application d'associer pour la session de communication au moins une information relative à la fonction de commande de ressources à un ou des messages de niveau applicatif reçus en provenance de l'entité cliente. Plus précisément ce message M3 est un message Diameter « Credit Control Answer », comprenant notamment les règles PCC, l'instruction de commande et l'information relative à la fonction de commande de ressources.

Ce message M3 est reçu par l'entité d'application PCEF dans une étape F1. Conformément aux spécifications de référence, l'entité d'application PCEF installe les règles PCC. En fonction de la présence ou non de l'instruction de commande, l'entité d'application PCEF installe un processus de supervision des messages de niveau applicatif.

Un message M4 « Create Session Response » est transmis par la passerelle d'accès P-GW à la passerelle de rattachement S-GW, conformément aux spécifications de référence afin de finaliser l'établissement de la session de communication.

Une fois la session de communication établie, l'équipement utilisateur UE peut transmettre des messages de niveau applicatif à destination d'un équipement du réseau de données externe 30.

Ceci est représenté sur la figure 2 sous la forme d'un message N1. On rappelle ici que ce message N1 est transmis dans le plan de transport et que la passerelle d'accès P-GW est un point de passage obligé de l'ensemble des paquets transmis par l'équipement utilisateur à destination du réseau de données externe et réciproquement.

La passerelle d'accès P-GW reçoit ce message N1 dans une étape F2 et applique par l'intermédiaire de l'entité d'application PCEF les règles PCC qu'elle a reçues de l'entité de contrôle PCRF dans le message M3. Le processus de supervision détecte également que le message N1 est un message de niveau applicatif et que par conséquent un traitement particulier doit être effectué. Ce traitement particulier correspond à effectuer une association de la ou des informations relatives à la fonction de commande de ressources au message N1 pour former un message N2.

Dans un mode de réalisation particulier, l'association consiste à insérer dans le message N1 de niveau applicatif un élément d'information comprenant l'information relative à un support d'une fonction de commande de ressources et/ou l'identifiant de l'entité de commande à contacter.

Aucune limitation n'est attachée à cette méthode d'association par insertion donnée à titre d'exemple non limitatif. Toute autre méthode garantissant que cette association ne perturbe pas la réception et le traitement du message N2 en cas de non compatibilité au niveau protocolaire est envisageable.

Dans un mode de réalisation particulier, l'association mise en oeuvre par l'entité d'application PCEF est effectuée pour tous les messages de niveau applicatif portés par la session de communication. Dans un autre mode de réalisation, l'association mise en oeuvre par l'entité d'application PCEF est effectuée uniquement pour le premier message de niveau applicatif porté par la session de communication.

Le message N2 est ensuite acheminé vers le réseau de données externe 30, plus précisément vers l'entité applicative 28, où il est reçu dans une étape G1.

Dans cette étape G1, l'entité applicative 28 détermine si des modifications doivent être appliquées à la session de communication. Par exemple, il peut s'agir d'autoriser une qualité de service supérieure pour cette session. L'entité applicative 28 obtient également dans cette étape G1 à partir du message N2 la ou des informations relatives à la fonction de commande de ressources.

Il est ici souligné que lorsque le réseau de communication ne comprend pas d'entité de contrôle de règles ou bien lorsqu'aucune entité de contrôle de règles n'est configurée pour recevoir des commandes de ressource en provenance de cette entité applicative, la fonction de commande de ressources ne peut être mise en oeuvre.

On s'est placé pour ce premier mode de réalisation dans le cas où le réseau de communication comprend une entité de contrôle de règles et que cette dernière est configurée pour recevoir des commandes en provenance de l'entité applicative 28. Lorsque des modifications doivent être appliquées à la session de communication, l'entité applicative 28 les transmet à l'entité de contrôle PCRF. Lorsque l'identifiant de l'entité de commande à contacter est obtenu du message N2, l'entité applicative 28 les transmet à cette entité de commande. Dans l'exemple illustratif de la figure 2, l'entité de contrôle PCRF correspond à l'entité de commande à contacter. Plus précisément l'entité applicative AF 28 transmet un message M5 à l'entité de contrôle PCRF. Ce message M5 correspond à un message AA-Request Command (AA pour « AUTHORIZE_AUTHENTICATE »), comprenant des éléments d'information ou « Media-Component-Description AVP(s) » modifiés, conformément à la spécification TS 29.214 v. 8.12.0 (paragraphe 4.4.2).

Dans une étape E2, ce message M5 est acquitté par l'entité de contrôle PCRF par un message M6 AA-Answer.

Toujours dans cette étape E2, l'entité de contrôle PCRF détermine la session de commande correspondante et transmet à l'entité d'application PCEF un message M7 « IP-CAN Session Modification » comprenant de nouvelles règles PCC. Plus précisément le message M7 correspond à un message Diameter « Credit Control Request Update ».

L'entité applicative AF 28 est ainsi en mesure de déclencher la fonction de commande de ressources lorsque le réseau de communication comprend une entité de contrôle de règles et que celle-ci accepte de recevoir des commandes de ressources en provenance de cette entité applicative. L'entité applicative transmet à l'entité de contrôle de règles, qui gère la session de communication avec l'entité cliente, une ou des caractéristiques pour la session de communication grâce à la réception d'un identifiant d'une entité de commande à contacter.

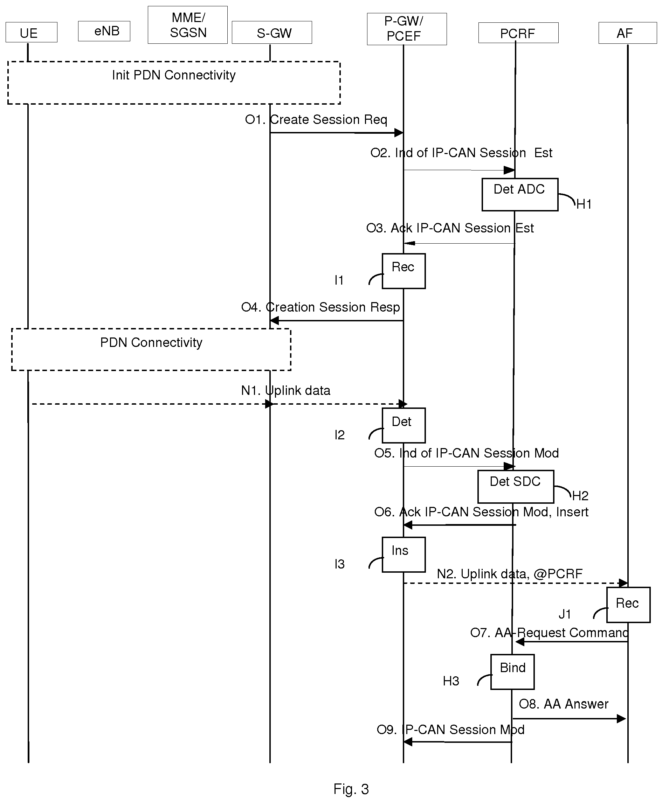

Un deuxième mode de réalisation va maintenant être décrit en relation avec la figure 3.

L'organisme de normalisation 3GPP a prévu à partir de la version 10 (release 10) des spécifications une fonctionnalité de commande de ressources particulière, c'est-à-dire une fonction de partenariat également appelée « Sponsored Data Connectivity ». Cette fonctionnalité de partenariat permet à un tiers ou « sponsor » de prendre en charge totalement ou en partie les coûts associés à la session de communication. L'annexe N de la TS 23.203 décrit l'utilisation des règles PCC pour la mise en oeuvre de cette fonctionnalité. Le deuxième mode de réalisation est décrit dans le cadre de cette fonction de partenariat mais reste applicable à toute fonction de commande de ressources.

On se place par la suite dans le cadre de la version 11 des spécifications.

Le procédé de communication dans ce deuxième mode de réalisation débute de manière similaire au premier mode de réalisation, la passerelle d'accès P-GW recevant un message O1 « Create Session Request », similaire au message M1.

Sur réception de ce message O1, l'entité d'application de règles PCEF transmet à l'entité de contrôle de règles PCRF une demande d'ouverture d'une session de commande relative à la session de communication entre l'équipement utilisateur et le réseau de données en mode paquet externe, c'est-à-dire un message 02 « Indication of IP-CAN Session Establishment », similaire au message M2 décrit précédemment en relation avec le premier mode de réalisation.

Dans une étape H1, l'entité de contrôle PCRF détermine comme décrit précédemment des politiques à appliquer à cette session de communication. Toujours dans cette étape H1, l'entité de contrôle PCRF détermine également une ou des applications pour lesquelles l'entité d'application PCEF doit notifier à l'entité de contrôle PCRF le début ou la fin de la session applicative. L'entité de contrôle PCRF obtient ainsi des règles ADC (pour « Application Detection and Control »). Une telle application correspond par exemple à une application pour laquelle un accord de partenariat est prévu. L'application peut être définie par un identifiant d'application au sens de la fonctionnalité ADC, une adresse universelle URL pour « Uniform Ressource Locator » ou bien une liste d'adresses universelles, un nom de domaine complètement qualifié FQDN ou un groupe de tels noms de domaine, un identifiant de réseau de données APN, une adresse IP ou un groupe d'adresses IP...

En réponse au message 02 de demande d'ouverture d'une session de commande, l'entité de contrôle PCRF transmet à l'entité d'application PCEF un message 03 d'acquittement « Ack IP-CAN Session Establishment », comprenant des règles PCC et des règles ADC à appliquer à la session de communication. Plus précisément ce message 03 est un message Diameter « Credit Control Answer », comprenant notamment les règles PCC et les règles ADC.

Ce message 03 est reçu par l'entité d'application dans une étape I1. Conformément aux spécifications de référence, l'entité d'application PCEF installe les règles PCC et les règles ADC. Les règles ADC permettent de superviser des messages de niveau applicatif.

Un message 04 « Create Session Response » est transmis par la passerelle d'accès P-GW à la passerelle de rattachement S-GW, conformément aux spécifications de référence afin de finaliser l'établissement de la session de communication.

Une fois la session de communication établie, l'équipement utilisateur UE peut transmettre des messages de niveau applicatif à destination d'un équipement du réseau de données externe 30.

Ceci est représenté sur la figure 3 sous la forme du message N1.

Dans une étape I2, la passerelle d'accès P-GW reçoit ce message N1 et applique par l'intermédiaire de l'entité d'application PCEF les règles PCC qu'elle a reçues de l'entité de contrôle PCRF dans le message 03. Le processus de supervision détecte également que le message N1 est un message de niveau applicatif, correspondant à une application pour laquelle l'entité de contrôle PCRF a demandé à être notifiée du début de la session applicative.

Cette détection déclenche l'envoi par la passerelle d'accès P-GW d'un message 05 « Indication of IP-CAN Session Modification » à l'entité de contrôle PCRF.

Dans une étape H2, l'entité de contrôle PCRF reçoit le message 05 et détermine s'il est nécessaire de fournir à l'entité applicative AF 28 une ou des informations relatives à la fonction de commande de ressources : une information relative à un support d'une fonction de partenariat pour la session et/ou un identifiant d'une entité de commande à contacter.

Dans un mode de réalisation particulier, ces deux informations sont fournies en fonction de l'application visée. Il s'agit par exemple de les fournir pour certaines applications pour lesquelles il existe des accords de partenariat.

Dans un autre mode de réalisation particulier, ces deux informations sont fournies en fonction du profil de l'utilisateur de l'entité cliente. La décision de mettre en oeuvre l'accord de partenariat est ensuite prise par l'entité applicative 28.

Dans un autre mode de réalisation particulier, ces deux informations sont fournies en fonction de l'application visée et du profil de l'utilisateur de l'entité cliente.

Dans un autre mode de réalisation particulier, ces deux informations sont fournies systématiquement. La décision de mettre en oeuvre l'accord de partenariat pour cette entité cliente est ensuite prise par l'entité applicative 28.

Toujours dans cette étape H2, l'entité de contrôle PCRF transmet un message 06 « Ack IP-CAN Session Modification » à l'entité d'application PCEF. Lorsque les deux informations doivent être fournies, le message 06 commande également à l'entité d'application d'associer ces deux informations à un ou des messages de niveau applicatif relatifs à cette application et reçus en provenance de l'entité cliente.

Dans une étape I3, la passerelle d'accès P-GW associe au message N1 ces deux informations pour former un message N2.

Dans un mode de réalisation particulier, l'association consiste à insérer dans le message N1 de niveau applicatif deux éléments d'information comprenant respectivement l'information relative à un support de la fonction de partenariat et l'identifiant de l'entité de commande à contacter.

Dans un autre mode de réalisation, l'association consiste à insérer dans le message N1 de niveau applicatif un élément d'information comprenant les deux informations.

Aucune limitation n'est attachée à cette méthode d'association par insertion donnée à titre d'exemple non limitatif. Toute autre méthode garantissant que cette association ne perturbe pas la réception et le traitement du message N2 en cas de non compatibilité au niveau protocolaire est envisageable.

Dans un mode de réalisation particulier, l'association mise en oeuvre par l'entité d'application PCEF est effectuée pour tous les messages de niveau applicatif relatifs à une application portés par la session de communication. Dans un autre mode de réalisation, l'association mise en oeuvre par l'entité d'application PCEF est effectuée uniquement pour le premier message de niveau applicatif relatif à une application porté par la session de communication.

Le message N2 est ensuite acheminé vers le réseau de données externe 30, plus précisément vers l'entité applicative 28, où il est reçu dans une étape J1.

Dans cette étape J1, l'entité applicative 28 obtient les deux informations à partir du message N2. L'entité applicative 28 détermine également si des modifications doivent être appliquées à la session de communication.

Lorsque des modifications doivent être appliquées à la session de communication, l'entité applicative 28 les transmet à l'entité de commande à contacter ainsi qu'une identité du partenaire. Plus précisément l'entité applicative AF 28 transmet un message O7 à l'entité de contrôle PCRF. Ce message O7 correspond à un message AA-Request Command, similaire au message M5 décrit précédemment en relation avec le premier mode de réalisation.

Dans une étape H3, ce message O7 est acquitté par l'entité de contrôle PCRF par un message O8 AA-Answer.

Toujours dans cette étape H3, l'entité de contrôle PCRF détermine la session de commande correspondante et transmet à l'entité d'application PCEF un message O9 « IP-CAN Session Modification » comprenant de nouvelles règles PCC, similaire au message M7 décrit précédemment en relation avec le premier mode de réalisation.

L'entité applicative AF 28 est ainsi en mesure de déclencher la fonction de partenariat lorsque l'entité de contrôle de règles le supporte et de transmettre une ou des caractéristiques pour la session de communication grâce à la réception d'un identifiant d'une entité de commande à contacter. Il est ainsi possible de mettre en oeuvre progressivement la fonction de partenariat avant même que l'ensemble des entités de contrôle de règles ne supporte cette fonction.

Le procédé de communication permet en outre d'activer la fonction de partenariat session par session.

Corrélativement, l'entité d'application de règles obtient ainsi des règles auprès d'une entité de contrôle de règles dans un réseau de communication par un procédé d'obtention de règles. Ce procédé comprend les étapes suivantes mises en oeuvre par l'entité d'application de règles :
- recevoir une demande d'ouverture d'une session de communication entre une entité cliente et un réseau de données en mode paquet externe ;
- transmettre à cette entité de contrôle une demande d'ouverture d'une session de commande relative à cette session de communication ;
- recevoir en provenance de l'entité de contrôle une commande d'association pour cette session de communication à au moins un message de niveau applicatif reçu en provenance de l'entité cliente au moins une information relative à une fonction de commande de ressources, cette au moins information étant destinée à être utilisée par une entité applicative située dans ce réseau de données externe pour mettre en oeuvre une commande de ressources pour cette session ;
- recevoir en provenance de l'entité cliente un message de niveau applicatif ;
- transmettre le message reçu et cette au moins information associée.

Différents modes de réalisation et différentes variantes sont également prévus pour ce procédé d'obtention de règles en fonction du procédé de communication correspondant et ne sont pas décrites de façon exhaustive.

Dans un mode de réalisation particulier, lorsqu'un équipement de traduction d'adresse se situe entre la passerelle d'accès P-GW et l'entité applicative AF 28, l'entité de contrôle PCRF commande en outre (à l'étape E1 pour le premier mode ou à l'étape H2 pour le deuxième mode) à l'entité d'application PCEF d'associer à au moins un message de niveau applicatif reçu en provenance de l'entité cliente un identifiant de session. Cet identifiant de session correspond également à une information relative à une fonction de commande de ressources. Dans un mode de réalisation, l'identifiant de session correspond à un couple d'informations, comprenant une adresse de l'entité cliente dans le réseau de communication et un numéro de port (correspondant aux informations associées à la session de communication dont dispose l'entité de contrôle de règles). Dans un autre mode de réalisation, l'identifiant de session est affecté par l'entité de contrôle PCRF et cette dernière mémorise une table de correspondance entre cet identifiant de session et le couple d'informations. Grâce à l'identifiant de session, l'entité de contrôle de règles PCRF peut mettre en oeuvre l'association de session.

Dans un mode de réalisation particulier, l'entité de contrôle PCRF commande en outre (à l'étape E1 pour le premier mode ou à l'étape H2 pour le deuxième mode) à l'entité d'application PCEF d'associer à au moins un message de niveau applicatif reçu en provenance de l'entité cliente une information relative à un protocole à utiliser pour contacter cette entité de commande. Cette information relative à un protocole correspond également à une information relative à une fonction de commande de ressources. A titre d'exemple illustratif, lorsque l'identifiant de l'entité de commande à contacter est fourni sous la forme d'un identifiant uniforme de ressource URI, pour « Uniform Resource Identifier », l'identifiant de protocole est alors précisé sous la forme suivante : aaa://pcrf1.orange.com:6666;transport=tcp;protocol=diameter.

Nous allons maintenant décrire une entité de contrôle de règles 24 dans un mode particulier de réalisation en référence à la figure 4.

L'entité de contrôle de règles 24 comprend notamment :
- un module d'émission et de réception 101 dans le plan de contrôle, agencé pour communiquer avec une ou des entités d'application de règles ;
- un module de détermination 102, agencé pour déterminer des règles à appliquer à une session de communication et pour déterminer si un ou des informations relatives à une fonction de commande de ressources doivent être fournies à une entité applicative ;
- un module de commande 103, agencé pour commander à l'entité d'application des règles d'associer pour une session de communication à au moins un message de niveau applicatif reçu en provenance de l'entité cliente cette au moins une information, ladite au moins information étant destinée à être utilisée par l'entité applicative située dans ledit réseau de données externe pour mettre en oeuvre une commande de ressources pour ladite session.

Le module d'émission/réception 101 est notamment agencé pour recevoir en provenance de l'entité d'application une demande d'ouverture d'une session de commande relative à une session de communication entre une entité cliente et un réseau de données en mode paquet externe.

Dans un mode de réalisation particulier, le module de détermination 102 détermine également des règles ADC. L'association est alors commandée par le module de commande 103 pour au moins un message de niveau applicatif relatif à une application, détectée par l'entité d'application de règles.

Nous allons maintenant décrire une entité d'application de règles 20 dans un mode particulier de réalisation en référence à la figure 5.

L'entité d'application de règles 20 comprend notamment:
- un premier module d'émission/réception 201 dans le plan de commande, agencé pour communiquer avec l'entité de contrôle de règles 24 et avec une passerelle de rattachement ;
- un module d'association 203, agencé pour associer à au moins un message de niveau applicatif reçu pour ladite session au moins une information relative à une fonction de commande de ressources ;
- un deuxième module d'émission/réception 202 dans le plan de transport, agencé pour recevoir un message de niveau applicatif et pour transmettre ledit message et ladite au moins information

Le module d'émission/réception 201 est notamment agencé pour :
- recevoir une demande d'ouverture d'une session de communication entre une entité cliente et un réseau de données en mode paquet externe ;
- transmettre à l'entité de contrôle une demande d'ouverture d'une session de commande relative à cette session de communication ;
- recevoir en provenance de l'entité de contrôle une commande d'association pour une session de communication à au moins un message de niveau applicatif reçu en provenance de l'entité cliente au moins une information relative à une fonction de commande de ressources pour la session, cette au moins une information étant destinée à être utilisée par une entité applicative située dans ledit réseau de données externe pour mettre en oeuvre une commande de ressources pour ladite session.

Dans un mode de réalisation particulier, le module d'émission/réception 201 est également agencé pour recevoir des règles ADC à appliquer à la session de communication et pour notifier l'entité de contrôle des règles en fonction des règles ADC des évènements associés à une application. La commande d'association est alors relative à au moins un message de niveau applicatif relatif à cette application détectée.

L'invention concerne en outre un système de contrôle de règles dans un réseau de communication ledit système comprenant au moins une entité de contrôle de règles PCRF telle que décrite précédemment, au moins une entité d'application de règles PCEF telle que décrite précédemment et une entité applicative, agencée pour recevoir au moins une information destinée à être utilisée pour mettre en oeuvre une commande de ressources pour une session.

Les procédés de communication et d'obtention sont mis en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 101, 102, 103 sont agencés pour mettre en oeuvre le procédé de communication précédemment décrit. Il s'agit de préférence de modules logiciels comprenant des instructions logicielles pour faire exécuter les étapes du procédé précédemment décrit, mises en oeuvre par l'entité de contrôle de règles 24. L'invention concerne donc aussi :
- un programme d'ordinateur pour une entité de contrôle, comprenant des instructions de code de programme destinées à commander l'exécution des étapes du procédé précédemment décrit, lorsque ledit programme est exécuté par cette entité ;
- un support d'enregistrement lisible par une entité de contrôle de règles sur lequel est enregistré le programme pour entité.

Dans un mode de réalisation particulier, les modules 201, 202, 203 sont agencés pour mettre en oeuvre le procédé d'obtention de règles précédemment décrit. Il s'agit de préférence de modules logiciels comprenant des instructions logicielles pour faire exécuter les étapes du procédé précédemment décrit, mises en oeuvre par l'entité d'application de règles 20. L'invention concerne donc aussi :
- un programme d'ordinateur pour une entité d'application de règles, comprenant des instructions de code de programme destinées à commander l'exécution des étapes du procédé précédemment décrit, lorsque ledit programme est exécuté par cette entité ;
- un support d'enregistrement lisible par une entité d'application de règles sur lequel est enregistré le programme pour entité.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Les modes de réalisation particuliers ont été décrits dans le cadre des spécifications 3GPP pour un réseau de communication mobile. Ils sont aisément transposables à tout réseau de communication en mode paquet, dans lequel est prévue une architecture de commande de ressources, comprenant un point de décision de règles PDP, un point d'application de règles PEP, tels que définis dans le document de l'IETF RFC 3198, et une interface permettant à un fournisseur d'applications de service ASP de communiquer avec le point de décision de règles.

## Revendications

1. Procédé de communication entre une entité d'application de règles (20, 22) et une entité de contrôle de règles (24, 26) dans un réseau de communication (2), ledit procédé comprenant les étapes suivantes mises en oeuvre par l'entité de contrôle de règles :
- recevoir (E1, H1) en provenance de ladite entité d'application de règles (20, 22) une demande d'ouverture d'une session de commande relative à une session de communication entre une entité cliente (1) et un réseau de données en mode paquet externe (30) ;
- commander (E1, H2) à ladite entité d'application de règles (20, 22) d'insérer pour ladite session de communication dans au moins un message de niveau applicatif reçu en provenance de l'entité cliente au moins une information relative à une fonction de commande de ressources, ladite au moins une information étant destinée à être utilisée par une entité applicative située dans ledit réseau de données externe pour mettre en oeuvre une commande de ressources pour ladite session.

2. Procédé selon la revendication 1, dans lequel ladite information est relative à un support de la fonction de commande de ressources par l'entité de contrôle.

3. Procédé selon la revendication 1, dans lequel ladite information est un identifiant d'une entité de commande à contacter, ledit identifiant étant destiné à être utilisé par ladite entité applicative pour transmettre au moins une caractéristique pour ladite session.

4. Procédé selon la revendication 1, dans lequel l'étape de commande est mise en oeuvre en fonction d'un profil associé à un utilisateur de l'entité cliente.

5. Procédé selon la revendication 1, dans lequel l'étape de commande est mise en oeuvre en fonction d'un identifiant du réseau de données externe.

6. Procédé selon la revendication 1, comprenant en outre une réception (H2) d'une notification émise par ladite entité d'application de règles (20, 22) suite à une réception d'un message de niveau applicatif en provenance de l'entité cliente et relatif à une application, et dans lequel l'étape de commande est mise en oeuvre pour un message de niveau applicatif relatif à ladite application.

7. Procédé selon la revendication 1, dans lequel l'entité de contrôle de règles (24, 26) commande en outre à ladite entité d'application de règles (20, 22) d'associer audit au moins un message de niveau applicatif reçu en provenance de l'entité cliente un identifiant de session.

8. Procédé d'obtention de règles par une entité d'application de règles (20, 22) auprès d'une entité de contrôle de règles (24, 26) dans un réseau de communication (2), ledit procédé comprenant les étapes suivantes mises en oeuvre par l'entité d'application de règles :
- recevoir une demande d'ouverture d'une session de communication entre une entité cliente et un réseau de données en mode paquet externe ;
- transmettre à ladite entité de contrôle de règles (24, 26) une demande d'ouverture d'une session de commande relative à ladite session de communication ;
- recevoir (F1, I3) en provenance de ladite entité de contrôle de règles (24, 26) une commande d'insertion pour ladite session de communication dans au moins un message de niveau applicatif reçu en provenance de l'entité cliente d'au moins une information relative à une fonction de commande de ressources pour la session, ladite au moins une information étant destinée à être utilisée par une entité applicative située dans ledit réseau de données externe pour mettre en oeuvre une commande de ressources pour ladite session ;
- recevoir en provenance de l'entité cliente un message de niveau applicatif;
- transmettre ledit message et ladite au moins une information à l'entité applicative.

9. Entité de contrôle de règles (24, 26), agencée pour communiquer avec une entité d'application de règles (20, 22) dans un réseau de communication (2), ladite entité de contrôle de règles (24, 26) comprenant les modules suivants :
- un module de réception (101), agencé pour recevoir en provenance de ladite entité d'application de règles (20, 22) une demande d'ouverture d'une session de commande relative à une session de communication entre une entité cliente et un réseau de données en mode paquet externe ;
- un module de commande (103), agencé pour commander à ladite entité d'application de règles (20, 22) d'insérer pour ladite session de communication dans au moins un message de niveau applicatif reçu en provenance de l'entité cliente au moins une information relative à une fonction de commande de ressources pour la session, ladite au moins une information étant destinée à être utilisée par une entité applicative située dans ledit réseau de données externe pour mettre en oeuvre une commande de ressources pour ladite session.

10. Entité d'application de règles (20, 22), agencée pour communiquer avec une entité de contrôle de règles (24, 26) dans un réseau de communication (2), ladite entité d'application de règles (20, 22) comprenant les modules suivants :
- un module de réception (201), agencé pour
- recevoir une demande d'ouverture d'une session de communication entre une entité cliente et un réseau de données en mode paquet externe
- recevoir en provenance de ladite entité de contrôle de règles (24, 26) une commande d'insertion pour ladite session de communication dans au moins un message de niveau applicatif reçu en provenance de l'entité cliente d'au moins une information relative à une fonction de commande de ressources pour la session, ladite au moins une information étant destinée à être utilisée par une entité applicative située dans ledit réseau de données externe pour mettre en oeuvre une commande de ressources pour ladite session ;
- un premier module d'émission (201), agencé pour transmettre à ladite entité de contrôle de règles (24, 26) une demande d'ouverture d'une session de commande relative à ladite session de communication ;
- un module d'association (203), agencé pour insérer dans au moins un message de niveau applicatif reçu pour ladite session ladite au moins une information ;
- un deuxième module d'émission (202), agencé pour transmettre ledit message et ladite au moins une information associée à l'entité applicative.

11. Système de contrôle de règles dans un réseau de communication (2), ledit système comprenant au moins une entité de contrôle de règles selon la revendication 9, au moins une entité d'application de règles selon la revendication 10 et une entité applicative, agencée pour recevoir au moins une information destinée à être utilisée pour mettre en oeuvre une commande de ressources pour une session.

12. Programme pour une entité de contrôle de règles (24, 26), comprenant des instructions de code de programme destinées à commander l'exécution des étapes du procédé de communication selon l'une des revendications 1 à 7, lorsque ledit programme est exécuté par ladite entité.

13. Support d'enregistrement lisible par une entité de contrôle de règles sur lequel est enregistré le programme selon la revendication 12.

14. Programme pour une entité d'application de règles, comprenant des instructions de code de programme destinées à commander l'exécution des étapes du procédé d'obtention selon la revendication 8, lorsque ledit programme est exécuté par ladite entité.

15. Support d'enregistrement lisible par une entité d'application de règles sur lequel est enregistré le programme selon la revendication 14.

## Patentansprüche

1. Verfahren zur Kommunikation zwischen einer Richtliniendurchsetzungseinheit (20, 22) und einer Richtlinienkontrolleinheit (24, 26) in einem Kommunikationsnetz (2), wobei das Verfahren die folgenden Schritte aufweist, die durch die Richtlinienkontrolleinheit ausgeführt werden:
- Empfangen (E1, H1) von der Richtliniendurchsetzungseinheit (20, 22) einer Eröffnungsanfrage einer Steuerungssitzung in Bezug auf eine Kommunikationssitzung zwischen einer Client-Einheit (1) und einem externen Paketmodusdatennetz (30);
- Befehlen (E1, H2) der Richtliniendurchsetzungseinheit (20, 22), für die Kommunikationssitzung in mindestens eine Anwendungsebenenachricht, die von der Client-Einheit empfangen wird, mindestens eine Information über eine Ressourcensteuerfunktion einzufügen, wobei die mindestens eine Information dazu bestimmt ist, von einer Anwendungseinheit verwendet zu werden, die sich in dem externen Datennetz befindet, um eine Ressourcensteuerung für die Sitzung auszuführen.

2. Verfahren nach Anspruch 1, wobei sich die Information auf einen Träger der Ressourcensteuerfunktion durch die Kontrolleinheit bezieht.

3. Verfahren nach Anspruch 1, wobei die Information eine Kennung einer zu kontaktierenden Steuereinheit ist, wobei die Kennung dazu bestimmt ist, von der Anwendungseinheit verwendet zu werden, um mindestens ein Merkmal für die Sitzung zu übertragen.

4. Verfahren nach Anspruch 1, wobei der Steuerschritt in Abhängigkeit von einem Profil, das einem Benutzer der Client-Einheit zugeordnet ist, umgesetzt wird.

5. Verfahren nach Anspruch 1, wobei der Steuerschritt in Abhängigkeit von einer Kennung des externen Datennetzes ausgeführt wird.

6. Verfahren nach Anspruch 1, ferner umfassend ein Empfangen (H2) einer Benachrichtigung, die durch die Richtliniendurchsetzungseinheit (20, 22) infolge eines Empfangens einer Anwendungsebenenachricht von der Client-Einheit und in Bezug auf eine Anwendung, ausgegeben wird, und wobei der Steuerschritt für eine Anwendungsebenenachricht in Bezug auf die Anwendung ausgeführt wird.

7. Verfahren nach Anspruch 1, wobei die Richtlinienkontrolleinheit (24, 26) ferner der Richtliniendurchsetzungseinheit (20, 22) befiehlt, der mindestens einen Anwendungsebenenachricht, die von der Client-Einheit empfangen wird, eine Sitzungskennung zuzuordnen.

8. Verfahren zum Erhalten von Richtlinien von einer Richtliniendurchsetzungseinheit (20, 22) bei einer Richtlinienkontrolleinheit (24, 26) in einem Kommunikationsnetz (2), wobei das Verfahren die folgenden Schritte aufweist, die durch die Richtliniendurchsetzungseinheit ausgeführt werden:
- Empfangen einer Eröffnungsanfrage einer Kommunikationssitzung zwischen einer Client-Einheit und einem externen Paketmodusdatennetz;
- Übermitteln an die Richtlinienkontrolleinheit (24, 26) einer Eröffnungsanfrage einer Steuerungssitzung in Bezug auf die Kommunikationssitzung;
- Empfangen (F1, I3) von der Richtlinienkontrolleinheit (24, 26) eines Befehles zum Einfügen für die Kommunikationssitzung in mindestens eine Anwendungsebenenachricht, die von der Client-Einheit empfangen wird, von mindestens einer Information über eine Ressourcensteuerfunktion für die Sitzung, wobei die mindestens eine Information dazu bestimmt ist, von einer Anwendungseinheit verwendet zu werden, die sich in dem externen Datennetz befindet, um eine Ressourcensteuerung für die Sitzung auszuführen;
- Empfangen von der Client-Einheit einer Anwendungsebenenachricht;
- Übermitteln der Nachricht und der mindestens einen Information an die Anwendungseinheit.

9. Richtlinienkontrolleinheit (24, 26), die ausgebildet ist, um mit einer Richtliniendurchsetzungseinheit (20, 22) in einem Kommunikationsnetz (2) zu kommunizieren, wobei die Richtlinienkontrolleinheit (24, 26) die folgenden Module aufweist:
- ein Empfangsmodul (101), das ausgebildet ist, um von der Richtliniendurchsetzungseinheit (20, 22) eine Eröffnungsanfrage einer Steuerungssitzung in Bezug auf eine Kommunikationssitzung zwischen einer Client-Einheit und einem externen Paketmodusdatennetz zu empfangen;
- ein Befehlsmodul (103), das ausgebildet ist, um der Richtliniendurchsetzungseinheit (20, 22) zu befehlen, für die Kommunikationssitzung in mindestens eine Anwendungsebenenachricht, die von der Client-Einheit empfangen wird, mindestens eine Information über eine Ressourcensteuerfunktion für die Sitzung einzufügen, wobei die mindestens eine Information dazu bestimmt ist, von einer Anwendungseinheit verwendet zu werden, die sich in dem externen Datennetz befindet, um eine Ressourcensteuerung für die Sitzung auszuführen.

10. Richtliniendurchsetzungseinheit (20, 22), die ausgebildet ist, um mit einer Richtlinienkontrolleinheit (24, 26) in einem Kommunikationsnetz (2) zu kommunizieren, wobei die Richtliniendurchsetzungseinheit (20, 22) die folgenden Module aufweist:
- ein Empfangsmodul (201), das ausgebildet ist, um
- eine Eröffnungsanfrage einer Kommunikationssitzung zwischen einer Client-Einheit und einem externen Paketmodusdatennetz zu empfangen
- von der Richtlinienkontrolleinheit (24, 26) einen Befehl zum Einfügen für die Kommunikationssitzung in mindestens eine Anwendungsebenenachricht, die von der Client-Einheit empfangen wird, von mindestens einer Information über eine Ressourcensteuerfunktion für die Sitzung zu empfangen, wobei die mindestens eine Information dazu bestimmt ist, von einer Anwendungseinheit verwendet zu werden, die sich in dem externen Datennetz befindet, um eine Ressourcensteuerung für die Sitzung auszuführen;
- ein erstes Sendemodul (201), das ausgebildet ist, um an die Richtlinienkontrolleinheit (24, 26) eine Eröffnungsanfrage einer Steuerungssitzung in Bezug auf die Kommunikationssitzung zu übermitteln;
- ein Zuordnungsmodul (203), das ausgebildet ist, um in mindestens eine empfangene Anwendungsebenenachricht für die Sitzung die mindestens eine Information einzufügen;
- ein zweites Sendemodul (202), das ausgebildet ist, um die Nachricht und die mindestens eine zugeordnete Information an die Anwendungseinheit zu übermitteln.

11. Richtlinienkontrollsystem in einem Kommunikationsnetz (2), wobei das System mindestens eine Richtlinienkontrolleinheit nach Anspruch 9, mindestens eine Richtliniendurchsetzungseinheit nach Anspruch 10 und eine Anwendungseinheit aufweist, die ausgebildet ist, um mindestens eine Information zu empfangen, die dazu bestimmt ist, verwendet zu werden, um eine Ressourcensteuerung für eine Sitzung auszuführen.

12. Programm für eine Richtlinienkontrolleinheit (24, 26), umfassend Programmcodebefehle, die dazu bestimmt sind, das Ausführen der Schritte des Kommunikationsverfahrens nach einem der Ansprüche 1 bis 7 zu steuern, wenn das Programm von der Einheit ausgeführt wird.

13. Aufzeichnungsmedium, das von einer Richtlinienkontrolleinheit lesbar ist, auf der das Programm nach Anspruch 12 aufgezeichnet ist.

14. Programm für eine Richtliniendurchsetzungseinheit, umfassend Programmcodebefehle, die dazu bestimmt sind, das Ausführen der Schritte des Erhaltungsverfahrens nach Anspruch 8 zu steuern, wenn das Programm von der Einheit ausgeführt wird.

15. Aufzeichnungsmedium, das von einer Richtliniendurchsetzungseinheit lesbar ist, auf der das Programm nach Anspruch 14 aufgezeichnet ist.

## Claims

1. Method of communication between a rules application entity (20, 22) and a rules control entity (24, 26) in a communication network (2), said method comprising the following steps implemented by the rules control entity:
- receiving (E1, H1) from said rules application entity (20, 22) a request to open a command session relating to a communication session between a client entity (1) and an external packet mode data network (30);
- commanding (E1, H2) said rules application entity (20, 22) to insert for said communication session at least one item of information relating to a resources command function into at least one application level message received from the client entity, said at least one item of information being intended to be used by an application entity situated in said external data network to implement a resources command for said session.

2. Method according to Claim 1, in which said item of information relates to a support of the resources command function by the control entity.

3. Method according to Claim 1, in which said item of information is an identifier of a command entity to be contacted, said identifier being intended to be used by said application entity to transmit at least one characteristic for said session.

4. Method according to Claim 1, in which the command step is implemented as a function of a profile associated with a user of the client entity.

5. Method according to Claim 1, in which the command step is implemented as a function of an identifier of the external data network.

6. Method according to Claim 1, furthermore comprising a reception (H2) of a notification sent by said rules application entity (20, 22) subsequent to a reception of an application level message from the client entity and relating to an application, and in which the command step is implemented for an application level message relating to said application.

7. Method according to Claim 1, in which the rules control entity (24, 26) furthermore commands said rules application entity (20, 22) to associate a session identifier with said at least one application level message received from the client entity.

8. Method of obtaining rules by a rules application entity (20, 22) from a rules control entity (24, 26) in a communication network (2), said method comprising the following steps implemented by the rules application entity:
- receiving a request to open a communication session between a client entity and an external packet mode data network;
- transmitting a request to open a command session relating to said communication session to said rules control entity (24, 26);
- receiving (F1, I3) from said rules control entity (24, 26) a command of insertion for said communication session of at least one item of information relating to a resources command function for the session into at least one application level message received from the client entity, said at least one item of information being intended to be used by an application entity situated in said external data network to implement a resources command for said session;
- receiving an application level message from the client entity;
- transmitting said message and said at least one item of information to the application entity.

9. Rules control entity (24, 26), designed to communicate with a rules application entity (20, 22) in a communication network (2), said rules control entity (24, 26) comprising the following modules:
- a reception module (101), designed to receive from said rules application entity (20, 22) a request to open a command session relating to a communication session between a client entity and an external packet mode data network;
- a command module (103), designed to command said rules application entity (20, 22) to insert for said communication session at least one item of information relating to a resources command function into at least one application level message received from the client entity for the session, said at least one item of information being intended to be used by an application entity situated in said external data network to implement a resources command for said session.

10. Rules application entity (20, 22), designed to communicate with a rules control entity (24, 26) in a communication network (2), said rules application entity (20, 22) comprising the following modules:
- a reception module (201), designed to
- receive a request to open a communication session between a client entity and an external packet mode data network
- receive from said rules control entity (24, 26) a command of insertion for said communication session of at least one item of information relating to a resources command function for the session into at least one application level message received from the client entity, said at least one item of information being intended to be used by an application entity situated in said external data network to implement a resources command for said session;
- a first sending module (201), designed to transmit a request to open a command session relating to said communication session to said rules control entity (24, 26) ;
- an association module (203), designed to insert said at least one item of information into at least one application level message received for said session;
- a second sending module (202), designed to transmit said message and said at least one item of information associated with the application entity.

11. System for controlling rules in a communication network (2), said system comprising at least one rules control entity according to Claim 9, at least one rules application entity according to Claim 10 and an application entity, designed to receive at least one item of information intended to be used to implement a resources command for a session.

12. Program for a rules control entity (24, 26), comprising program code instructions intended to command the execution of the steps of the method of communication according to one of Claims 1 to 7, when said program is executed by said entity.

13. Recording medium readable by a rules control entity and on which the program according to Claim 12 is recorded.

14. Program for a rules application entity, comprising program code instructions intended to command the execution of the steps of the method of obtaining according to Claim 8, when said program is executed by said entity.

15. Recording medium readable by a rules application entity and on which the program according to Claim 14 is recorded.
